# EUROPÄISCHE PATENTSCHRIFT

(11) **EP 2 054 271 B1**
(45) Veröffentlichungstag und Bekanntmachung des Hinweises auf die Patenterteilung: **08.02.2012**
(21) Anmeldenummer: 07724972.0
(22) Anmeldetag: 08.05.2007
(51) Int. Cl.: B60R 16/02

(54) **FESTLEGESYSTEM**
FIXING SYSTEM
SYSTEME DE FIXATION

(30) Priorität: 23.08.2006 DE 102006039579
(43) Veröffentlichungstag der Anmeldung: 06.05.2009
(73) Patentinhaber: Gottlieb Binder GmbH & Co. KG, 71088 Holzgerlingen (DE)
(72) Erfinder: POULAKIS, Konstantinos, 71157 Hildrizhausen (DE)
(74) Vertreter: Bartels, Martin Erich Arthur
(86) Internationale Anmeldenummer: PCT/EP2007/004048
(87) Internationale Veröffentlichungsnummer: WO 2008/022661

(56) Entgegenhaltungen:
- EP-A- 0 813 277
- WO-A-03/002377
- DE-A1- 2 300 986
- DE-A1- 3 107 557
- FR-A- 2 116 704
- FR-A- 2 545 662
- GB-A- 2 040 544

## Beschreibung

Die Erfindung betrifft ein Festlegesystem mindestens eines elektronischen und/oder elektrischen Bauteils - kurz E-Bauteil genannt - wie Chips, Schaltungen, Transponder, Kabel etc, mit mindestens einem ersten Befestigungselement mit einzelnen Verschlußteilen, die in Zusammenwirkung mit korrespondierenden Verschlußteilen eines weiteren Befestigungselementes einen wiederholt öffen- und schließbaren Haftverschluß ausbilden und das jeweilige E-Bauteil festlegen, wobei dieses mit einem Träger verbunden ist.

Durch die EP 0813 277 A2 ist ein vorverkabeltes Auskleidungsteil für die Innenauskleidung eines Fahrzeuges bekannt. Das bekannte Auskleidungsteil ist so gestaltet, dass dessen Vorverkabelung erleichtert ist und mit reduziertem Aufwand einhergeht und eine Demontage des Kabelstranges auf möglichst einfache Weise vorgenommen werden kann. Dazu weist das Auskleidungsteil entlang des anzuordnenden elektrischen Kabelstranges ein Kletten^{®}-Haftverschlußband oder im Abstand voneinander angeordnete Kletten^{®}-Haftverschlußbandabschnitte für den Kabelstrang auf und der elektrische Kabelstrang ist mit einem Mantel oder im Abstand angeordneten Manschetten aus einem korrespondierenden Verschlußmaterial - sei es in Form eines Haken- oder Schlingenmaterials - zur Bildung einer lösbaren Haftverschlußverbindung mit dem Kletten^{®}-Band oder den Kletten^{®}-Bandabschnitten versehen. Die Ummantelung des Kabelstranges mit den genannten Kletten^{®}-Bandelementen ist entsprechend zeitaufwendig und mithin kostenintensiv.

Durch die WO 03/002377 A2 ist ein gattungsgemäßes Festlegesystem für den Einsatz bei Kraftfahrzeugen mit einem Fahrzeuggehäuse bekannt, von dem mindestens ein Teil der Innenfläche beispielsweise in Form eines sog. Dachhimmels von einer Überzugsplatte von elektrischen oder elektronischen Gegenständen, wie beispielsweise Kabeln, elastischen gedruckten Schaltungen, elastischen Flachkabeln oder Antivibrationseinlagen - kurz E-Bauteile genannt -, die zwischen die Überzugsplatte und das Gehäuse eingefügt sind, bedeckt ist, wobei männliche Einhakteile als erstes Befestigungselement, insbesondere in Form von Verschlußhaken, vorgesehen sind, die den Gegenständen und/oder dem Fahrzeuggehäuse zugeordnet sind, um ihre Befestigung an der Platte zu ermöglichen. Hierzu ist insbesondere vorgesehen, dass die Überzugsplatte auf einer ihrer Seiten ein Schlingengewebe als korrespondierende Verschlußteile eines weiteren Befestigungselementes mit einer Basis und mit aus der Basis vorstehenden Schlingen umfaßt und dass das dahingehende Schlingengewebe im wesentlichen die gesamte Plattenfläche der Überzugsplatte bedeckt, um dergestalt einen wiederholt öffen- und schließbaren Haftverschluß auszubilden, der es ermöglicht, die genannten E-Bauteile lösbar mit den Fahrzeuggehäuseteilen, wie einem Dachhimmel od. dgl., definiert zu verbinden und dort festzulegen.

In Fortgestaltung der bekannten Lösung ist es bei einer geänderten Ausführungsform auch möglich, ein elastisches Flachkabel einzusetzen mit einem jeweiligen Träger als Basis, auf dem elektrische Schaltungen, insbesondere durch Ätzen oder Drucken, aufgebracht sind, wobei mindestens eine der Flächen des Trägers und vorzugsweise auf jeder Fläche des Trägers ein Band befestigt, insbesondere geklebt ist, aus dem die Einhakelemente als Verschlußteile der eingesetzten Befestigungselemente vorstehen. Die erstgenannte Lösung läßt sich gegebenenfalls nur schwer montieren und die zweitgenannte Lösung birgt die Gefahr in sich, aufgrund der schichtenförmigen Mehrfachanordnung von Verschlußteilen zu einem vom Fahrzeuggehäuseteil weit abstehenden Funktionsaufbau zu führen, was gegebenenfalls beim späteren Anbringen von Überzugteilen, wie eines Dachhimmels, zu Problemen führen kann.

Ausgehend von diesem Stand der Technik liegt der Erfindung die Aufgabe zugrunde, die bekannten Lösungen dahingehend weiter zu verbessern, dass ein Festlegesystem nebst Befestigungselement für elektronische und/oder elektrische Bauteile - kurz E-Bauteile genannt - geschaffen ist, das wenig Platz benötigt, funktionssicher in der Anwendung ist und geringe Herstell- und Montagekosten beinhaltet. Eine dahingehende Aufgabe löst ein Festlegesystem mit den Merkmalen des Patentanspruches 1 in seiner Gesamtheit.

Dadurch, dass gemäß dem kennzeichnenden Teil des Patentanspruches 1 das weitere Befestigungselement mit dem Träger verbunden ist, der zumindest teilweise eine Klebstoffschicht aufweist und/oder aus einer Einbettmasse besteht, die die direkte Anbindung des jeweiligen E-Bauteils mit dem zuordenbaren jeweiligen weiteren Befestigungselement herstellen, ist eine Lösung geschaffen, die nur sehr wenig Einbauraum benötigt. Insbesondere ist eine Ausgestaltung möglich, bei der die E-Bauteile nur mit einem geringen Überstand von den korrespondierenden Verschlußteilen vorstehen, so dass sich beispielsweise mit dem erfindungsgemäßen Festlegesystem die E-Bauteile teilweise sogar überstandsfrei an Fahrzeuggehäuseteilen, wie einem Dachhimmel od.dgl., festlegen lassen. Da die eingesetzte Klebstoffschicht und/oder Einbettmasse kostengünstig herstellbar ist, sind insoweit die Herstellkosten für das Gesamtsystem als niedrig zu bewerten. Da darüber hinaus das jeweilige E-Bauteil sich vor dem eigentlichen Festlegevorgang bereits an der Klebstoffschicht und/oder der Einbettmasse festlegen läßt, ist insoweit der Montagevorgang erleichtert und insbesondere läßt sich mit dem erfindungsgemäßen Festlegesystem eine weitgehende Freiheit bei der Führung von E-Bauteilen erreichen, was insbesondere beim Einsatz von Kabeln oder Kabelsträngen eine große Rolle spielt.

Weitere vorteilhafte Ausführungsformen sind Gegenstand der sonstigen Unteransprüche.

Im folgenden wird das erfindungsgemäße Festlegesystem anhand verschiedener Ausführungsbeispiele nach der Zeichnung näher erläutert. Dabei zeigen in prinzipieller und nicht maßstäblicher Darstellung die
- Fig.1: eine prinzipielle seitliche Darstellung auf das Festlegesystem in geöffneter Stellung;
- Fig.2: eine perspektivische Draufsicht auf das in Blickrichtung auf die Fig.1 gesehen untere weitere Befestigungselement mit festgelegtem Kabelstrang;
- Fig.3 bis 6: eine der Fig.1 entsprechende Darstellung für das jeweils untere Haftverschlußteil als weiteres Befestigungselement.

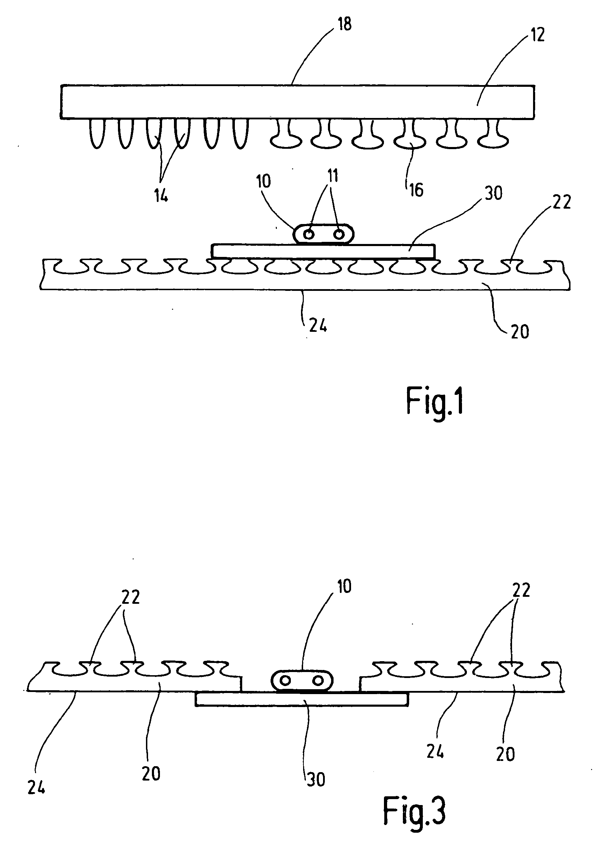

Die Fig.1 zeigt in prinzipieller Darstellung eine Ausführungsform des erfindungsgemäßen Festlegesystems für elektronische und/oder elektrische Bauteile - kurz E-Bauteile genannt -, wie Chips, Schaltungen, Transponder, Kabel etc.. Im folgenden werden die Festlegemöglichkeiten anhand der Verlegung eines Flachbandkabels 10 erläutert mit zwei in ihm geführten elektrischen Leitungssträngen 11. Anstelle des Flachbandkabels 10 können aber auch die bereits genannten sonstigen E-Bauteile treten (nicht dargestellt). Das Festlegesystem weist ein erstes Befestigungselement 12 auf mit einzelnen Verschlußteilen, sei es in Form von Verhakungsschlaufen oder-schlingen 14, sei es in Form von Verhakungselementen 16 in Haken- oder, wie dargestellt, in sog. Pilzform. Die genannten Verschlußteile 14,16 können gemischt auftreten; bevorzugt ist jedoch nur der Einsatz eines Verschlußteils vorgesehen. Das erste Befestigungselement 12 kann als Band- oder Flächenelement dergestalt beispielsweise klebend an Fahrzeuggehäuse- oder - karosserieteilen festgelegt sein. Dazu wird das Befestigungselement 12 mit seiner in Fig.1 dargestellten Oberseite 18 an den genannten Gehäuseteilen klebend festgelegt, wobei der Einsatz des Festlegesystems nicht auf Kraftfahrzeuge eingeschränkt zu sein braucht, sondern ebenso sind Anwendungen denkbar im Schienen-, Flugzeug- oder Schiffsbereich. Die Anwendungsmöglichkeiten des skizzierten Festlegesystems sind dergestalt nahezu beliebig. Bei einer besonders bevorzugten Ausführungsform soll jedoch das erfindungsgemäße Festlegesystem im sog. Dachhimmelbereich eines Kraftfahrzeugs (nicht dargestellt) eingesetzt werden, bei dem das Autodach von der Fahrzeuginnenseite her weitgehend mit dem Befestigungselement 12 ausgekleidet sein kann. Bevor die eigentliche Himmelabdeckung, also das Fahrzeuginnendach, mit seiner Polsterung aufgesetzt wird, ist es bedarfsweise notwendig, E-Bauteile im skizzierten Sinne am Dachhimmel von außen nicht einsehbar zu verlegen. Hierzu dient besonders bevorzugt das noch im einzelnen zu beschreibende Festlegesystem.

Dieses weist zur Stützung für das jeweilige E-Bauteil, hier in Form des Flachbandkabels 10, ein weiteres Befestigungselement 20 auf, das mit korrespondierenden Verschlußteile 22 in sog. Pilzform auf seiner Oberseite ausgestattet ist. Die dahingehenden Verschlußteile 22 sind wiederholt offen- und schließbar mit den Verhakungsschlingen 14 oder den pilzförmigen Verhakungselementen 16 unter Bildung eines an sich konventionellen Kletten^{®}-Haftbandverschlusses verbindbar. Anstelle der pilzartig ausgebildeten Verschlußteile 22 können auch hier Schlingen oder Schlaufen (nicht dargestellt) treten, die dann mit den Verhakungselementen 16 des ersten Befestigungselementes 12 dergestalt lösbar verbindbar sind. An der Unterseite 24 des weiteren Befestigungselementes 20 kann sich dann der vorzugsweise gepolsterte Innenbezug des Dachhimmels festgelegt anschließen und bei Bildung des Haftverschlusses ist dann der eigentliche Dachhimmel mit den Dachkarosserieteilen eines Fahrzeuges lösbar verbunden.

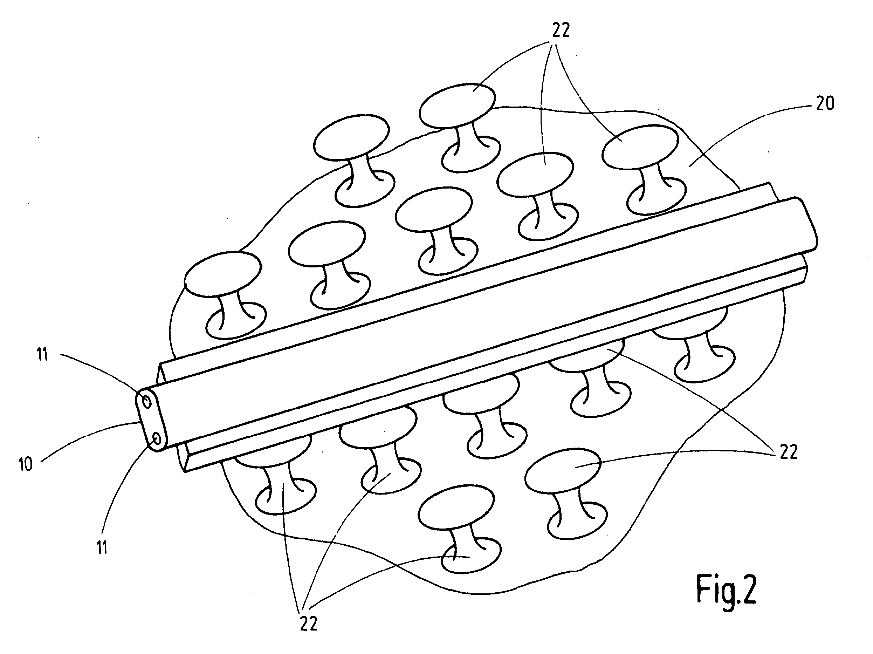

Des weiteren ist ein Träger 30 vorgesehen, der bei der Ausführungsform nach der Fig.1 auf beiden Seiten eine Klebstoffschicht aufweist, welcher insbesondere als Basisträger aus einem doppelseitig klebenden Klebeband besteht, um dergestalt in Blickrichtung auf die Fig.1 gesehen auf der Oberseite des Trägers 30 das Flachbandkabel 10 festzulegen. Die klebende Unterseite dient dabei der Verhaftung des Trägers 30 auf der stirnseitigen Oberfläche der pilzkopfartigen Verschlußteile 22 des weiteren Befestigungselementes 20. Die dahingehende Anordnung hat den Vorteil, dass sich der als Klebeband ausgebildete Träger 30 leicht an dem weiteren Befestigungselement 20 festlegen, aber von dort auch wieder entfernen läßt. Ferner kann das Flachbandkabel 10 in der Zeichenebene auch in Kurven längs des Trägers 30 verlaufend angeordnet sein, der insoweit dem Kurvenverlauf des Flachbandkabels 10 nachfolgen soll. Wie die Draufsicht nach der Fig.2 zeigt, kann das Klebeband als Träger 30 bandartig verlaufen und ausgestaltet sein; es besteht aber auch hier die Möglichkeit einer flächigen Ausdehnung, um beispielsweise mehrere E-Bauteile nebeneinander, wie Flachbandkabel 10, klebend festlegen zu können. Sofern das Flachbandkabel 10 einen zusätzlichen Umgebungsschutz benötigen sollte, besteht auch bei einer nicht näher dargestellten Ausführungsform die Möglichkeit, das Flachbandkabel 10 zwischen zwei Schichten an Klebebändern als Träger 30 aufzunehmen. Führt man in Blickrichtung auf die Fig.1 gesehen dann die beiden Befestigungselemente 12, 20 aufeinander zu, ist der bereits beschriebene lösbare Kletten^{®}-Haftverschluß realisiert und das E-Bauteil entsprechend festgelegt.

Die nachfolgenden Ausführungsbeispiele werden nur noch insoweit erläutert, als sie sich wesentlichen von dem vorangegangenen ersten Ausführungsbeispiel unterscheiden. Insoweit gelten die bisher getroffenen Ausführungen zum ersten Ausführungsbeispiel auch für die weiteren Ausführungsbeispiele. Ferner werden in den folgenden Ausführungsbeispielen die übereinstimmenden Komponenten des Festlegesystems mit denselben Bezugszeichen versehen.

Bei der zweiten Ausführungsform nach der Fig.3 grenzen zwei gleichartige weitere Befestigungselemente 20 unter Bildung eines vorgebbaren Abstandes aneinander an. Der dahingehende Abstand wird dann wiederum über ein Klebeband als Träger 30 überbrückt, der bei der dahingehenden Ausführungsform nur auf seiner Oberseite mit der Klebstoffschicht zu versehen sein braucht. Insoweit trägt der Träger 30 an seiner Oberseite wiederum das Flachbandkabel 10 und ist im übrigen im Untergriff klebend mit den Unterseiten 24 der weiteren Befestigungselemente 20 verbunden.

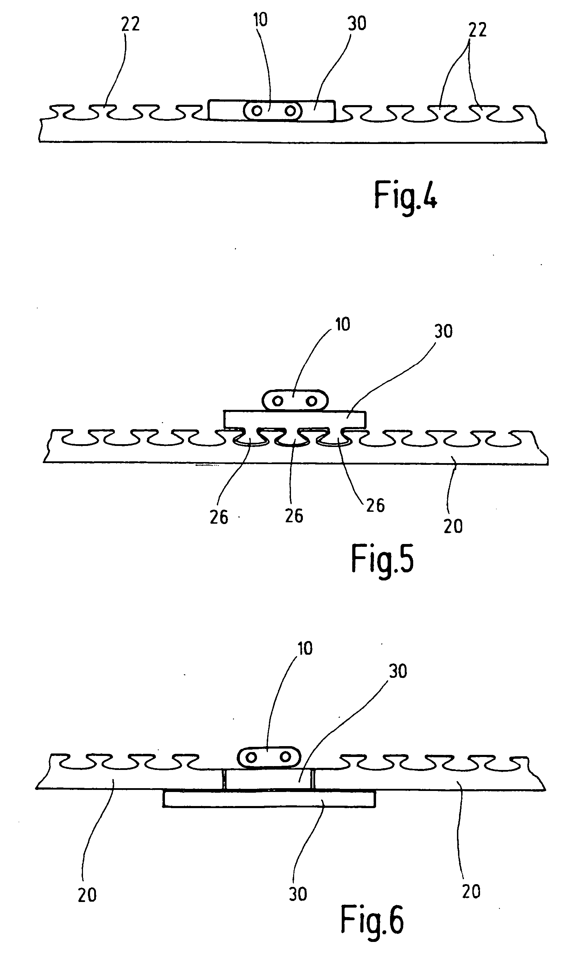

Bei der weiteren dritten Ausführungsform nach der Fig. 4 ist der Träger 30 nunmehr als eine Art Abdeckmasse Einbettmasse ausgebildet, die das Flachbandkabel 10 integriert. Die dahingehende Einbettmasse ist wiederum klebend mit dem weiteren Befestigungselement 20 verbunden, das hierfür einen Abstand vorsieht, der frei ist von den pilzartigen Verschlußteilen 22. Um hier eine gute Anbindung des weiteren Befestigungselementes 20 mit dem aufgezeigten ersten Befestigungselement 12 zu erreichen, ist die Bauhöhe der Einbettmasse vorzugsweise derart gewählt, dass diese möglichst überstandsfrei mit der stirnseitigen Oberseite der Verschlußteile 22 abschließt. Die Einbettmasse kann so ausgestaltet sein, dass sie als Festbett an ihrer Unterseite eine separate Klebstoffschicht trägt; in einer bevorzugten Ausführungsform jedoch ist die Einbettmasse selbst als Ganzes in klebender Weise ausgebildet.

Bei der ergänzenden Ausführungsform nach der Fig.5 ist als Träger 30 wiederum eine Einbettmasse gewählt, die an ihrer Unterseite vorzugsweise einstückig weitere Verschlußteile 26 aufweist, die korrespondierend zu den pilzartigen Verschlußteilen 22 des weiteren Befestigungselementes 20 ausgebildet, in deren Zwischenabstände lösbar eingreifen können. Auf der Oberseite ist die Einbettmasse wiederum mit einem Klebstoff versehen oder selbstklebend, um dergestalt das Flachbandkabel 10 an dem weiteren Befestigungselement 20 festzulegen.

Die Ausführungsform nach der Fig.6 zeigt eine Kombination von bandartigem Träger 30 mit Klebstoffschicht und tragender Einbettmasse für das Flachbandkabel 10. Gemäß der Ausführungsform nach der Fig.3 untergreift der bandartige Träger 30 die benachbarten weiteren Befestigungselemente 20 und trägt auf seiner Oberseite als zusätzlichen Träger 30 eine Einbettmasse, die wiederum auf ihrer Oberseite das Flachbandkabel 10 führt. Auch hier können die Einbaumaße derart gewählt werden, dass das Flachbandkabel 10 nur mit einem gegebenenfalls geringen Überstandsmaß über die vorderen Stirnseiten der Verschlußköpfe vorsteht oder auch ohne Überstand aufgenommen ist.

Die obigen Ausführungen machen deutlich, dass mit dem erfindungsgemäßen Festlegesystem eine Vielzahl an Anwendungsmöglichkeiten abdeckbar wäre. Dergestalt sind nicht alle möglichen Ausführungsformen aufzeigbar. Des weiteren machen die vorstehenden Ausführungen deutlich, dass neben dem Flachbandkabel 10 auch weitere nicht näher dargestellte E-Bauteile derart an Befestigungselementen festgelegt werden können, oder dass dahingehende Kabelleitungen mit entsprechenden weiteren E-Bauteilen kombiniert sich dergestalt festlegen lassen.

Die aufgezeigten Befestigungselemente 12,20 lassen sich beispielsweise mittels eines Formgebungsverfahrens herstellen, wie es in der DE 100 39 937 A1 aufgezeigt ist. Das bekannte Verfahren dient dem Herstellen eines Haftverschlußteils als Befestigungselement mit einer Vielzahl von einstückig mit einem Verschlußträger verbundenen und symmetrisch aufgebauten Verhakungsmitteln als Verschlußteile in Form jeweils eines mit einem Kopfteil versehenen Stengelteils, bei dem ein formbarer Werkstoff in eine Formgebungszone zwischen einem Druckwerkzeug und einem Formwerkzeug zugeführt wird und diese derart angetrieben werden, dass der Verschlußträger in der Formgebungszone gebildet und in eine Transportrichtung gefördert wird und bei dem als formgebendes Element am Formwerkzeug Formhohlräume mit jeweils gegenüberliegenden Begrenzungswänden verwendet werden. Dadurch, das zumindest an einem Längsschnit des jeweiligen Formhohlraumes gesehen die einander gegenüberliegenden Begrenzungswände durchgehend mit einem konvexen Bahnverlauf versehen werden, entstehend hyperboloidartige Verschlußteile, deren Verschlußcharakteristik mit sonstigen Verschlußteilen zur Bildung des Haftverschlusses sich als ausgesprochen günstig erweisen. Auch lassen sich die Schälfestigkeitswerte für das Haftverschlußsystem noch dahingehend weiter verbessern, dass entgegen der Darstellung nach der Fig.2 die freien Kopfteile nicht kreisrund, sondern dann in der Art eines n-ecks, vorzugsweise Sechseckes (nicht dargestellt) ausgebildet sind.

Die für die Befestigungselemente 12,20 zum Einsatz kommenden, zu verarbeitenden Kunststoffmaterialien können vielfältig sein, beispielsweise in Form von Polyamiden oder Polyolefinen, wie Polypropylen oder Polyethylen (HDPL und LDPL). Ferner kommen auch andere Thermoplaste zum Einsatz, wie Polyester, Polyethylenterephthalat, Polystyrene, Polycarbonate, Polymethylmethacrylate, Ethylen, Vinylacetat Copolymere einschließlich Acrylat modifizierte Ethylene, Vinylacetat Polymere und Ethylen Acryl Azid Copolymere sowie Polyethylenstyrene. Ferner ist die Anwendung von Duroplasten denkbar sowie von Elastomeren, wie natürlich oder synthetisch herstellbarer Gummi einschließlich von Styren Block Copolymeren mit Anteilen von Isopren, Butadien oder Ethylen (Butylene)-Blocks. Dahingehende Elastomermaterialien eignen sich auch besonders zur Bildung des Trägers 30 als Einbettmasse, wobei man dahingehende Elastomermaterialien auch fachsprachlich teilweise als sog. Hotmelt-Werkstoffe oder Hotmelts bezeichnet.

Ferner besteht grundsätzlich die Möglichkeit der Anwendung für metallocen-catalisiertes Polyolefin für Polyurethan oder Polydiorganosiloxane. Zur Aussteifung des Trägermaterials für die Befestigungselemente 12,20 können auch duktile Thermoplaste anwendbar sein, wie Nylon oder Polyvinylchlorid.

Der vorstehend genannte Begriff "Hotmelt" steht für eine dem Englischen entnommene Sammelbezeichnung, unter der sowohl die Schmelzklebstoffe (holtmelt-Klebstoffe) als auch sog. Heißschmelzmassen (hotmelt-Beschichtungen und Dichtmassen sowie Einbettmassen) verstanden werden. Die hier für den Träger 30 zum Einsatz kommenden "Hotmelts" sind dadurch charakterisiert, dass bei normaler Temperatur sie feste viskoelastische oder viskoplastische Körper ausbilden und neben den bereits beschriebenen Elastomeren können auch Harze, Wachse, Thermoplaste, gegebenenfalls mit Zusatz von Füllstoffen, Antioxidantien, Gleitmitteln und dergleichen zum Einsatz kommen, die beim Erwärmen nach Durchlaufen eines thermoplastischen Bereichs in zäh- bzw. dünnflüssige Schmelzen übergehen können. Als einzusetzende Schmelzklebstoffe können auch solche auf Acrylatbasis Anwendung finden.

Die Fig. 1 bis 6 betreffen insoweit auch das Befestigungselement 20 für das Festlegesystem, das als verbaubare Einheit neben einem elektronischen und/oder elektrischen Bauteil - kurz E-Bauteil genannt - die Klebstoffschicht und/oder die Einbettmasse aufweist, die eine Anbindung des jeweiligen E-Bauteils mit dem Befestigungselement 20 herstellt. Die dahingehend handelbare Einheit läßt sich dann vor Ort beispielsweise in eine Herstell-Linie für ein Kraftfahrzeug für den späteren Einbau beispielsweise im Dachhimmelbereich bevorraten.

## Patentansprüche

1. Festlegesystem mindestens eines elektronischen und/oder elektrischen Bauteils (10) - kurz E-Bauteil (10) genannt - mit mindestens einem ersten Befestigungselement (12) mit einzelnen Verschlußteilen (14,16), die in Zusammenwirkung mit korrespondierenden Verschlußteilen (22) eines weiteren Befestigungselementes (20) einen wiederholt öffen- und schließbaren Haftverschluß ausbilden und das jeweilige E-Bauteil (10) Festlegen, wobei das jeweilige E-Bauteil mit einem Träger (30) verbunden ist, **dadurch gekennzeichnet, dass** das weitere Befestigungselement (20) mit dem Träger (30) verbunden ist, wobei dieser zumindest teilweise eine Klebstoffschicht aufweist und/oder aus einer Einbettmasse besteht, die die direkte Anbindung des jeweiligen E-Bauteils mit dem zuordenbaren weiteren Befestigungselement (20) herstellen.

2. Festlegesystem nach Anspruch 1, **dadurch gekennzeichnet, dass** der Träger (30) ein vorzugsweise doppelseitig wirkendes Klebeband ist.

3. Festlegesystem nach Anspruch 2, **dadurch gekennzeichnet, dass** das Klebeband auf seiner einen Seite das E-Bauteil (10) trägt und auf seiner anderen Seite in stirnseitiger Anlage mit den Verschlußteilen (22) des jeweils weiteren Befestigungselementes (20) ist.

4. Festlegesystem nach Anspruch 2, **dadurch gekennzeichnet, dass** das Klebeband auf seiner das E-Bauteil (10) tragenden Seite mit der jeweiligen Rückseite zweier benachbarter Befestigungselemente (20) der weiteren Art verbunden ist, die auf Abstand gesetzt zwischen sich einen Kanal begrenzen zur Aufnahme des E-Bauteils (10).

5. Festlegesystem nach Anspruch 1, **dadurch gekennzeichnet, dass** der Träger (30) aus einer Einbettmasse besteht die mit mindestens einer Klebstoffschicht versehen ist und das E-Bauteil (10) trägt oder das E-Bauteil (10) zumindest teilweise in der Einbettmasse integriert ist.

6. Festlegesystem nach Anspruch 5, **dadurch gekennzeichnet, dass** die Einbettmasse auf ihrer dem weiteren Befestigungselement (20) zugewandten Seite vorzugsweise einstückig mit, zu den Verschlußteilen (22) des weiteren Befestigungselementes (20) korrespondierenden Verschlußteilen (26), versehen ist.

7. Festlegesystem nach einem der Ansprüche 1 bis 6, **dadurch gekennzeichnet, dass** der jeweilige Träger (30) zumindest teilweise einen Hotmelt aufweist oder vollständig aus Hotmelt besteht.

8. Festlegesystem nach Anspruch 7, **dadurch gekennzeichnet, dass** als Hotmelt für das Klebeband ein Schmelzklebstoff eingesetzt ist und für die Einbettmasse eine Heißschmelzmasse zum Einsatz kommt.

9. Festlegesystem nach Anspruch 8, **dadurch gekennzeichnet, dass** die Heikschmelzmasse aus einem unvernetzten thermoplastischen Kunststoffmaterial gebildet ist, vorzugsweise in Form eines synthetischen Kautschukmaterials.

## Claims

1. A fixing system of at least one electronic and/or electrical component (10) - referred to as an E-component (10) for short - comprising at least one first fastening element (12) having individual closure parts (14, 16) which, in interaction with corresponding closure parts (22) of a further fastening element (20) form an adhesive closure that can be opened and closed repeatedly and fix the respective E-component (10), the respective E-component being connected to a support (30), **characterised in that** the further fastening element (20) is connected to the support (30), the latter having at least in part an adhesive layer and/or consisting of an embedding mass which produce the direct linkage of the respective E-component to the assignable further fastening element (20).

2. The fixing system according to Claim 1, **characterised in that** the support (30) is preferably a double-sided adhesive tape.

3. The fixing system according to Claim 2, **characterised in that** the adhesive tape on its one side bears the E-component (10) and on its other side is in face-side contact with the closure parts (22) of the respective further fastening element (20).

4. The fixing system according to Claim 2, **characterised in that** on its side bearing the E-component (10) the adhesive tape is connected to the respective rear side of two adjacent fastening elements (20) of the further type which, set a distance apart from one another, define a channel for holding the E-component (10).

5. The fixing system according to Claim 1, **characterised in that** the support (30) is made of an embedding mass which is provided with at least one adhesive layer and bears the E-component (10), or the E-component (10) is integrated at least partially in the embedding mass.

6. The fixing system according to Claim 5, **characterised in that** on its side facing the further fastening element (20) the embedding mass is preferably provided integrally with closure parts (26) corresponding to the closure parts (22) of the further fastening element (20).

7. The fixing system according to any of Claims 1 to 6, **characterised in that** the respective support (30) has at least partially a hot melt or consists completely of hot melt.

8. The fixing system according to Claim 7, **characterised in that** hot melt used for the adhesive step is a hot melt adhesive and a hot melt mass is used for the embedding mass.

9. The fixing system according to Claim 8, **characterised in that** the hot melt mass is formed from an uncrosslinked thermoplastic material, preferably in the form of a synthetic rubber material.

## Revendications

1. Système de fixation d'au moins un composant (10) électronique et/ou électrique - dénommé en abrégé composant E (10) -, comprenant au moins un premier élément (12) de fixation ayant diverses parties (14, 16) de fermeture, qui, en coopération avec des parties (22) correspondantes de fermeture d'un autre élément (20) de fixation, forme une fermeture auto-agrippante pouvant s'ouvrir et se fermer de manière répétée et fixe le composant E (10) respectif, dans lequel le composant E respectif est relié à un support (30), **caractérisé en ce que** l'autre élément (20) de fixation est relié au support (30), celui-ci ayant, au moins en partie, une couche de colle et/ou étant constitué d'une masse d'enrobage, qui ménage la liaison directe du composant E respectif à l'autre élément (20) de fixation pouvant être associé.

2. Système de fixation suivant la revendication 1, **caractérisé en ce que** le support (30) est un ruban adhésif, de préférence double face.

3. Système de fixation suivant la revendication 2, **caractérisé en ce que** le ruban adhésif porte le composant E (10) sur l'une de ses faces et est sur son autre face en contact du côté frontal avec les parties (22) de fermeture de l'autre élément (20) de fixation.

4. Système de fixation suivant la revendication 2, **caractérisé en ce que** le ruban adhésif est relié sur sa face portant le composant E (10) à la face arrière respective de deux éléments (20) de fixation voisins de l'autre type, qui mis à distance délimitent entre eux un canal de réception du composant E (10).

5. Système de fixation suivant la revendication 1, **caractérisé en ce que** le support (30) est constitué d'une masse d'enrobage, qui est munie d'au moins une couche de colle et porte l'élément E (10) ou l'élément E (10) est intégré au moins en partie dans la masse d'enrobage.

6. Système de fixation suivant la revendication 5, **caractérisé en ce que** la masse d'enrobage est munie sur son côté tourné vers l'autre élément (20) de fixation, de préférence d'une seule pièce, de parties (26) de fermeture correspondantes aux parties (22) de fermeture de l'autre élément (20) de fixation.

7. Système de fixation suivant l'une des revendications 1 à 6, **caractérisé en ce que** le support (30) respectif comprend, au moins en partie, un hotmelt ou est constitué entièrement de hotmelt.

8. Système de fixation suivant la revendication 7, **caractérisé en ce que** l'on utilise, comme hotmelt pour le ruban adhésif, une colle fusible et, pour la masse d'enrobage, une masse fusible à chaud.

9. Système de fixation suivant la revendication 8, **caractérisé en ce que** la masse fusible à chaud est en une matière plastique thermoplastique non réticulée, de préférence sous la forme d'une matière en caoutchouc synthétique.
